# EUROPEAN PATENT SPECIFICATION

(11) **EP 3 722 589 B1**
(45) Date of publication and mention of the grant of the patent: **16.02.2022**
(21) Application number: 20159981.8
(22) Date of filing: 28.02.2020
(51) Int. Cl.: F02M 37/20, F02M 37/30, B60K 15/00, F02M 37/00, F02M 37/04, F02M 37/22

(54) **FUEL SUPPLY DEVICE OF AN ENGINE**
KRAFTSTOFFZUFÜHRVORRICHTUNG EINES MOTORS
DISPOSITIF D'ALIMENTATION EN CARBURANT D'UN MOTEUR

(30) Priority: 09.04.2019 JP 2019074222
(43) Date of publication of application: 14.10.2020
(73) Proprietor: Mazda Motor Corporation, Hiroshima 730-8670 (JP)
(72) Inventor: HOKAZONO, Kazuaki, Aki-gun, Hiroshima 730-8670 (JP); NOZAKI, Osamu, Aki-gun, Hiroshima 730-8670 (JP); MATSUMOTO, Yoshiyuki, Aki-gun, Hiroshima 730-8670 (JP); IKUSHIMA, Yusuke, Hiroshima-shi, Hiroshima 734-0026 (JP); SAITO, Hirotoshi, Hiroshima-shi, Hiroshima 734-0026 (JP); MATSUYAMA, Kazutoshi, Hiroshima-shi, Hiroshima 734-0026 (JP); DATE, Tetsuya, Hiroshima-shi, Hiroshima 734-0026 (JP); KODA, Yuki, Hiroshima-shi, Hiroshima 734-0026 (JP)
(74) Representative: Müller-Boré & Partner Patentanwälte PartG mbB

(56) References cited:
- WO-A1-2015/152000
- JP-A- 2007 176 345
- JP-A- 2008 030 639
- JP-A- 2008 163 875
- JP-A- 2010 112 228
- JP-U- S55 134 322
- US-A- 2 969 110

## Description

### Technical Field

The present invention relates to a fuel supply device for supplying fuel to an engine mounted on a vehicle.

### Background Art

Conventionally, there has been known a fuel filter which traps and removes foreign substances such as dust from fuel to be supplied to an engine. The fuel filter usually includes: a filter element formed of a reinforcing member, a non-woven fabric and the like; a metal filter case having an approximately cylindrical shape which houses the filter element, and the like. The fuel filter is exchangeably mounted in an engine room disposed on a front portion of a vehicle body.

The fuel filter is required to increase treatment ability proportional to a displacement of an engine. Accordingly, in a vehicle on which an engine having a large displacement is mounted, it is necessary to mount a large sized fuel filter in an engine room.

However, when the fuel filter becomes large sized, there may be a case where it is difficult to ensure a space for arranging the fuel filter in the engine room. In view of such circumstances, there has been proposed a technique where a fuel filter is disposed outside an engine room.

For example, a fuel filter described in JP 2010-112228 A is mounted on a vehicle body frame in a posture where a center axis of the fuel filter extends in a vertical direction. That is, the fuel filter described in the publication includes: a cylindrical filter case which extends in a vertical direction and is fixed to the vehicle body frame; and a filter element housed in the filter case. A supply path through which fuel flows into a fuel pump (fuel inflow path and fuel outflow path) and a return path through which surplus fuel flows from the fuel pump to a fuel tank (return fuel inflow path and return fuel outflow path) are respectively connected to the filter case.

Another example is known from the document JP S55 134322 U.

In a diesel engine which uses light oil as fuel, at a low temperature, there may be a case where a filter element is clogged due to precipitation of wax contained in the light oil in a case. Accordingly, a technique is adopted in which an electric heater which can increase a temperature of the whole filter is mounted on a fuel filter so as to remove the wax adhering to a filter element by melting.

On the other hand, a low boiling point component such as alcohol contained in fuel boils at a reduced pressure at a high temperature or under a low atmospheric pressure environment and hence, such a low boiling point component becomes a main factor which generates vapor (vapor bubbles). Particularly, when a diesel engine is used in a cold district, a temperature of light oil which is fuel is elevated due to an electric heater for removing wax and hence, minute vapor particles are likely to be generated in a fuel filter.

There may be a case where the minute vapor particles generated in the fuel filter are collected on a relatively front side in an advancing direction at the time of accelerating a vehicle in which fuel moves toward a rear side with respect to the advancing direction due to an inertial force, and grow into large-sized vapor particles. When the large-sized vapor particles collected on a front side in the advancing direction are sucked into a fuel pump through a fuel supply pipe, a flow rate of fuel ejected from a fuel pump becomes lower than a target flow rate. In this manner, in a circumstance where a flow rate of fuel is short, a required amount of fuel is not supplied to a combustion chamber from an injector and hence, there is a concern that favorable combustion cannot be realized and acceleration performance is deteriorated.

### Summary of Invention

It is an object of the present invention to provide a fuel supply device of an engine capable of suppressing deterioration of acceleration performance caused by suction of vapor particles.

To overcome the above drawbacks, according to the present invention, there is provided a fuel supply device which supplies fuel to an engine mounted on a vehicle, the fuel supply device including: a fuel tank; a fuel filter which is disposed in front of the fuel tank in a front-rear direction of the vehicle; a fuel pump which is disposed in front of the fuel filter in the front-rear direction of the vehicle; a first fuel supply pipe which connects the fuel tank and the fuel filter to each other; and a second fuel supply pipe which connects the fuel filter and the fuel pump to each other, in which a first connecting portion to which the first fuel supply pipe is connected is formed on a front portion of the fuel filter, and a second connecting portion to which the second fuel supply pipe is connected is formed on a rear portion of the fuel filter.

### Brief Description of Drawings

FIG. 1 is a schematic system diagram of a vehicle to which a fuel supply device according to one embodiment of the present invention is applied;
FIG. 2 is a bottom plan view of a vehicle where power system parts such as an engine and a transmission, a power supply device and a fuel supply device are viewed from below together with a vehicle body member such as a floor panel;
FIG. 3 is a cross-sectional side view of constitutional elements shown in FIG. 2;
FIG. 4 is a perspective view showing a layout of an inverter, a harness, a fuel supply pipe, and a fuel return pipe;
FIG. 5 is an enlarged view of a main part of the constitutional elements shown in FIG. 3;
FIG. 6 is a plan view of a fuel filter where various fuel pipes are also shown;
FIG. 7A is a schematic view showing the entire configuration of the fuel supply device; and
FIG. 7B is a schematic view showing the inside of the fuel filter.

### Description of Embodiments

Hereinafter, a preferred embodiment of the present invention will be described in detail with reference to the drawings. In the description made hereinafter, a case will be described where a fuel supply device according to the present invention is applied to a hybrid vehicle V. However, it is not intended to limit an object to which the present invention is applied to a hybrid vehicle V.

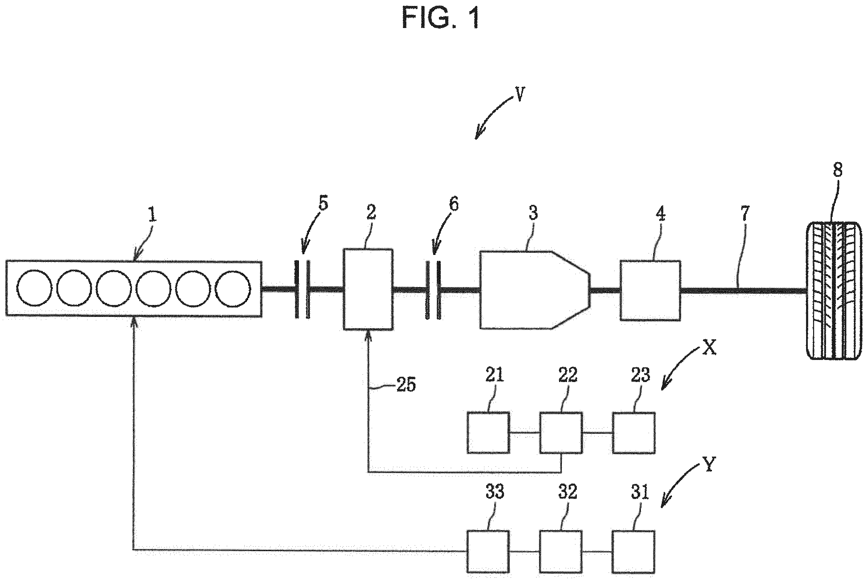

As shown in FIG. 1, the hybrid vehicle V (hereinafter referred to as vehicle V) according to this embodiment includes: an in-line six-cylinder diesel engine 1 (hereinafter simply referred to as engine 1) as a first power source; a motor generator 2 (hereinafter simply referred to as motor 2) as a second power source which is disposed downstream of the engine 1; an automatic transmission 3 (hereinafter simply referred to as AT3) disposed downstream of the motor 2; a differential gear mechanism 4 (hereinafter simply referred to as differential mechanism 4) which distributes a drive force to a pair of left and right rear wheels 8; a power supply device X; and a fuel supply device Y.

The engine 1 is disposed longitudinally in an engine room which is formed on a front portion of a vehicle body such that the direction of a row of cylinders is aligned with a front-rear direction of the vehicle. The engine 1 is driven using light oil supplied from the fuel supply device Y as a power source. An output shaft of the engine 1 is joined to a rotary shaft of the motor 2 at a position which corresponds to a front end of a tunnel portion 9a of a floor panel 9 described later. The output shaft of the engine 1 and the rotary shaft of the motor 2 are joined to each other by way of a first clutch 5 which can make the output shaft and the rotary shaft engage with each other or disengage from each other.

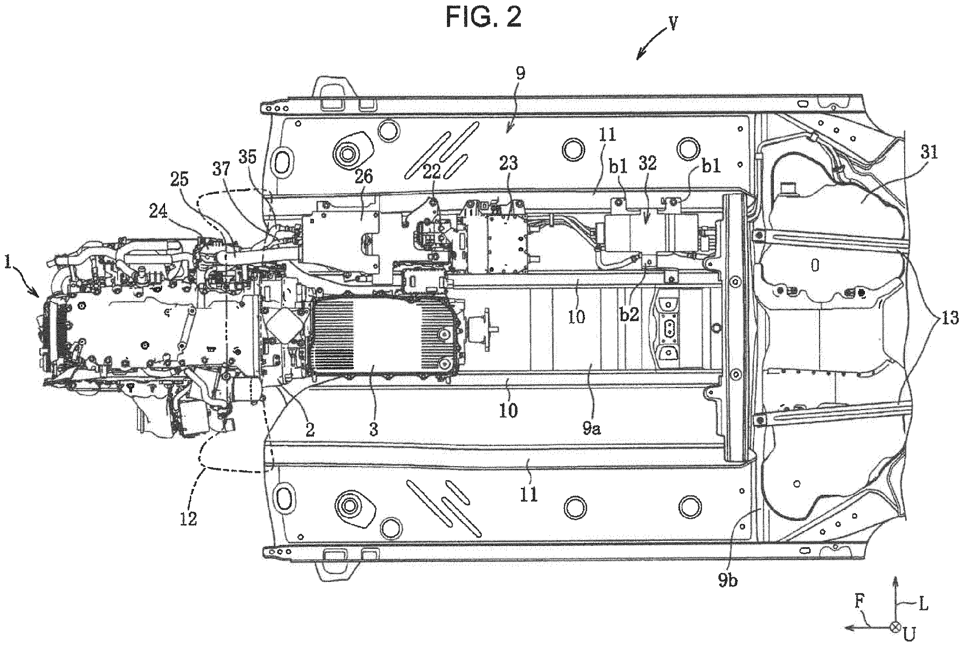

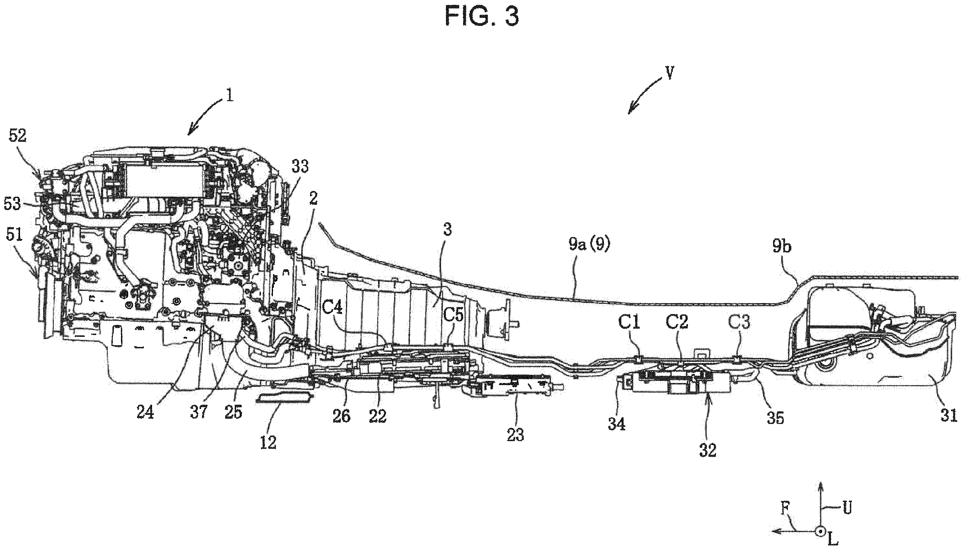

As shown in FIGS. 2 and 3, a floor panel 9 which forms a floor surface of a cabin is disposed at a bottom portion of the vehicle body. The floor panel 9 has a tunnel portion 9a at the center portion in the vehicle width direction. The tunnel portion 9a bulges into the cabin and extends in the front-rear direction. In the drawings, an arrow F indicates a front side of the vehicle, an arrow L indicates a left side of the vehicle, and an arrow U indicates an upper side of the vehicle.

A pair of left and right tunnel side frames 10 is provided at positions corresponding to the left and right side walls of the tunnel portion 9a. A pair of left and right floor frames 11 is disposed on both left and right sides of both tunnel side frames 10. The respective tunnel side frames 10 and the floor frames 11 form a closed cross section having an approximately rectangular shape in cross section extending in the front-rear direction in cooperation with the floor panel 9. A suspension cross member 12 which extends in a vehicle width direction is disposed below a front end portion of the tunnel portion 9a. The suspension cross member 12 is a member which supports suspensions (not illustrated) for suspending a pair of left and right front wheels.

The motor 2 is, for example, a permanent magnet motor of 25kW driven at 48V. The motor 2 is driven using electric power supplied from a power supply device X as a power source.

As shown in FIGS. 2 to 4, the motor 2 is joined coaxially (in series) with a rear end portion of the engine 1 between a front end portion of the tunnel portion 9a and the suspension cross member 12. A rotary shaft of the motor 2 and a rotary shaft of the AT3 are joined to each other by way of a second clutch 6 which can make the rotary shaft of the motor 2 and the rotary shaft of the AT3 engage with each other or disengage from each other.

The AT3 is substantially housed in the tunnel portion 9a. The differential mechanism 4 outputs a drive force inputted by way of an output shaft of the AT3 to drive shafts 7 which respectively correspond to left and right rear wheels 8. The differential mechanism 4 is configured to change a drive force distribution ratio to the left and right rear wheels 8 corresponding to a steering state.

Next, the power supply device X will be described.

As shown in FIGS. 1 to 4, the power supply device X includes: a battery 21; an inverter 22 electrically connected to the battery 21; a DC/DC converter 23 (hereinafter, simply referred to as a converter 23) electrically connected to the inverter 22; a terminal block 24 electrically connected to the motor 2; and a high voltage harness 25 (hereinafter simply referred to as a harness 25) which electrically connects the inverter 22 and the terminal block 24.

The battery 21 is an energy storage device which stores electric power for operating the motor 2. The battery 21 is, for example, a 48V, 3.5 kWh lithium ion battery, and is disposed inside the tunnel portion 9a.

The inverter 22 is configured to convert a DC current of the battery 21 to an AC current, and to supply a converted AC current to the motor 2 via the harness 25 and the terminal block 24.

As shown in FIGS. 2 to 4, the inverter 22 is formed in an approximately rectangular shape elongated in the front-rear direction as viewed in a plan view, and a front portion of the inverter 22 is fixed to a bracket 26 having a panel shape. More specifically, the inverter 22 is disposed on a left side region of the tunnel portion 9a in a posture where the longitudinal direction of the inverter 22 agrees with the front-rear direction, and is mounted on the vehicle body by way of the bracket 26. The bracket 26 has: a left fixing portion fixedly fastened to the floor frame 11 by bolts; and a right fixing portion fixedly fastened to a tunnel side frame 10 by bolts.

The converter 23 is configured to lower electric power of 48V stored in the battery 21 to 12V, and to supply electric power to electric equipment which are mounted on the vehicle V and are operable with 12V.

As shown in FIG. 2, converter 23 is formed in a substantially rectangular shape elongated in the front-rear direction as viewed in a plan view, and is connected to inverter 22 in series at a position away from inverter 22 rearward. The converter 23 is disposed on a left side region of the tunnel portion 9a in a posture where the longitudinal direction of the converter 23 agrees with the front-rear direction, and is mounted on the vehicle body. Specifically, the converter 23 has: a left fixing portion which protrudes leftward and is fixedly fastened to the floor frame 11 by bolts; and a front fixing portion which protrudes frontward and is fixedly fastened to a rear end portion of the bracket 26 by bolts.

As shown in FIG. 3, the converter 23 is disposed slightly below the inverter 22 as viewed in a side view.

The terminal block 24 relays electric power supplied from the inverter 22 to the motor 2.

In this embodiment, the motor 2 is disposed between the front end portion of the tunnel portion 9a and the suspension cross member 12, and the inverter 22 is disposed behind the suspension cross member 12. Accordingly, it is difficult to ensure a space for arranging the terminal block 24 between the motor 2 and the inverter 22. In view of the above, the terminal block 24 is disposed on a left side of a wall portion which corresponds to a cylinder on a rearmost side (rear end cylinder) on a lower portion of the cylinder block 51. The terminal block 24 disposed at such a position is positioned in the vicinity of a lower side of the fuel pump 33. A wiring system extending from the terminal block 24 to the motor 2 is routed along a left side surface of a wall corresponding to the rear end cylinder.

As shown in FIGS. 2 to 4, the harness 25 is routed such that the harness 25 extends substantially linearly in the front-rear direction from a front end portion of the inverter 22 to a lower end portion of the terminal block 24, and electrically connects the inverter 22 and the terminal block 24 to each other. The harness 25 is a general-use wire harness which includes a cable, a braided shield which shields the cable, and an insulating exterior member which covers the cable and the braided shield. The harness 25 has a characteristic that the harness 25 is elastically deformable in a radial direction.

As shown in FIG. 3, the harness 25 is routed so as to cross the suspension cross member 12 above the suspension cross member 12 with a predetermined distance therebetween.

Next, the fuel supply device Y will be described.

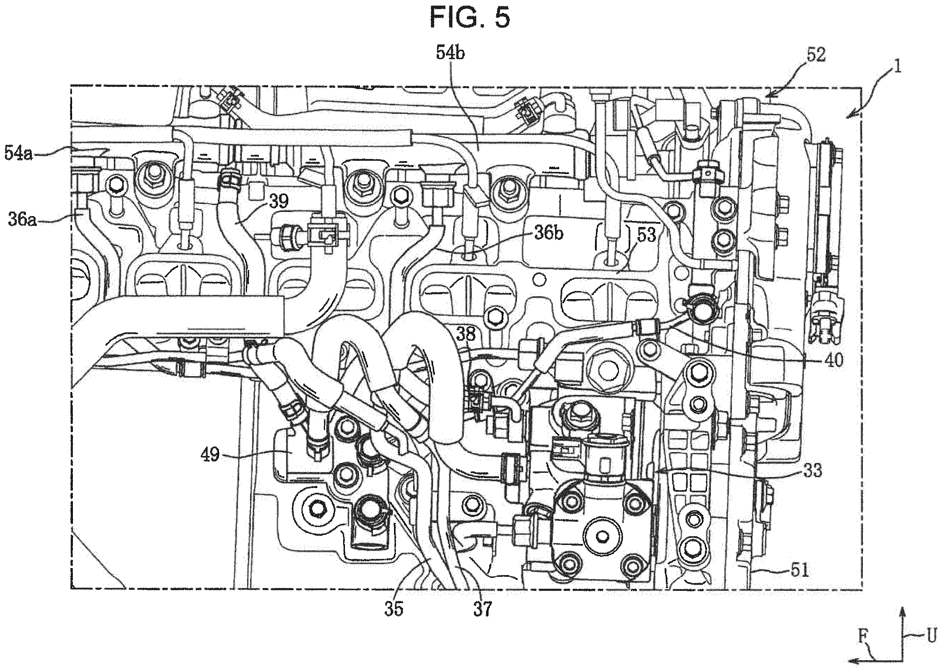

The fuel supply device Y includes: a fuel tank 31 having a flat shape capable of storing light oil which is fuel; a fuel filter 32 which traps and removes foreign substances in the fuel; a fuel pump 33 which pumps up the fuel from the fuel tank 31 and supplies the fuel to the engine; and a fuel return pipe 37 which returns surplus fuel to the fuel tank 31. The fuel filter 32 is connected to the fuel tank 31 by way of the first fuel supply pipe 34. The fuel pump 33 is connected to the fuel filter 32 by way of the second fuel supply pipe 35, and is connected to a pair of front and rear common rails 54a, 54b (FIG. 5) extending in the front-rear direction by way of the third fuel supply pipes 36a, 36b.

As shown in FIGS. 2 and 3, the fuel tank 31 is disposed below a rear portion of the floor panel 9. Specifically, the fuel tank 31 is fixed in a suspended manner by a kick-up portion 9b which is formed on a rear portion of the floor panel 9 and is inclined upward and rearward, by way of a pair of left and right fixing belts 13. The fuel tank 31 is disposed such that a lower surface of the fuel tank 31 is substantially at the same height position as the respective lower surfaces of the inverter 22 and the converter 23 as viewed in a side view.

As shown in FIGS. 2, 3, and 6, the fuel filter 32 is formed in an approximately elliptical cylindrical shape, and is mounted on the vehicle body in a posture where an axis of the fuel filter 32 extends in the front-rear direction. The fuel filter 32 is disposed such that the fuel filter 32 is positioned between the converter 23 and the fuel tank 31 in the front-rear direction below the floor panel 9, and is positioned between the tunnel side frame 10 and the floor frame 11 in the lateral direction (vehicle width direction). Left side brackets b1 which form a pair in the front-rear direction and a right side bracket b2 are fixed to an outer periphery (a filter case 32a described later) of the fuel filter 32. The pair of left brackets b1 is fastened to the floor frame 11 by bolts, and the right bracket b2 is fastened to the tunnel side frame 10 by bolts.

The fuel filter 32 has: a filter case 32a made of metal; filter elements (not illustrated) which include a reinforcing member, a non-woven fabric and the like housed in the filter case 32a; and an electric heater (not illustrated). The filter case 32a is formed in an approximately elliptical cylinder shape having its axis extending in the front-rear direction. The filter case 32a has a front wall w1 and a rear wall w2 at both ends in the axial direction (front-rear direction) of the filter case 32a. A size of the filter case 32a in the front-rear direction is set larger than a size of the filter case 32a in the vertical direction.

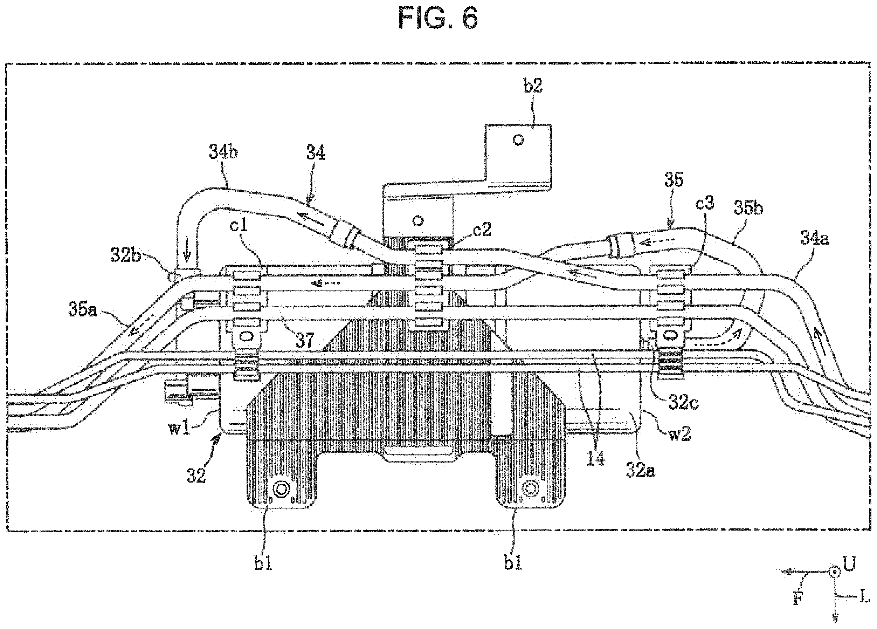

As shown in FIG. 6, the filter case 32a includes: an introducing portion 32b provided for introducing fuel from the fuel tank 31 into the filter case 32a; and a lead-out portion 32c provided for leading fuel from the filter case 32a to the fuel pump 33. The introducing portion 32b is formed such that the introducing portion 32b protrudes frontward from the front wall w1 of the filter case 32a, and the lead-out portion 32c is formed such that the lead-out portion 32c protrudes rearward from the rear wall w2 of the filter case 32a. The introducing portion 32b corresponds to "first connecting portion" of the present invention, and the lead-out portion 32c corresponds to "second connecting portion" of the present invention.

The first fuel supply pipe 34 has: a soft pipe portion 34b which forms a part of a front side of the first fuel supply pipe 34; and a hard pipe portion 34a which extends rearward from the soft pipe portion 34b. The soft pipe portion 34b is a curved rubber pipe having flexibility, and one end of the soft pipe portion 34b is connected to the introducing portion 32b. The hard pipe portion 34a is a metal pipe, and is connected to an end portion of the soft pipe portion 34b on a side opposite to the introducing portion 32b. In FIG. 6, the flow of fuel from the fuel tank 31 to the fuel filter 32 through the first fuel supply pipe 34 is indicated by an arrow of a solid line.

The second fuel supply pipe 35 has: a soft pipe portion 35b which forms a part of a rear side of the second fuel supply pipe 35; and a hard pipe portion 35a which extends frontward from the soft pipe portion 35b. The soft pipe portion 35b is a curved rubber pipe having flexibility, and one end of the soft pipe portion 35b is connected to the lead-out portion 32c. The hard pipe portion 35a is a metal pipe, and is connected to an end portion of the soft pipe portion 35b on a side opposite to the lead-out portion 32c. In FIG. 6, the flow of fuel from the fuel filter 32 to the fuel pump 33 through the second fuel supply pipe 35 is indicated by an arrow of a broken line.

The first and second fuel supply pipes 34 and 35 are routed so as to intersect with each other as viewed in a plan view in the vicinity of an upper side of the fuel filter 32. The first and second fuel supply pipes 34 and 35 respectively have portions which extend parallel to each other before and behind an intersecting portion where the first and second fuel supply pipes 34 and 35 intersect with each other.

As shown in FIG. 6, above the fuel filter 32, a fuel return pipe 37 and a pair of left and right brake liquid pipes 14 are routed in addition to the first and second fuel supply pipes 34 and 35 mentioned above. The fuel return pipe 37 and the brake liquid pipe 14 are respective metal pipes. The fuel return pipe 37 and the brake liquid pipe 14 extend in the front-rear direction above the fuel filter 32 in a state where the fuel return pipe 37 and the brake liquid pipe 14 are disposed close to each other. The first and second fuel supply pipes 34 and 35, the fuel return pipe 37 and the brake liquid pipe 14 are joined to each other using three metal clips c1 to c3 positioned above the fuel filter 32.

Specifically, the clip c1 joins, above a front portion of the fuel filter 32, the second fuel supply pipe 35 (specifically, the hard pipe portion 35a), the fuel return pipe 37 and the pair of brake liquid pipes 14 to each other. The clip c2 joins, above a center portion of the fuel filter 32 in the front-rear direction (behind the clip c1), the first fuel supply pipe 34 (hard pipe portion 34a), the second fuel supply pipe 35 (hard pipe portion 35a), and the fuel return pipe 37 to each other. The clip c3 joins, behind and above the fuel filter 32 (behind the clip c2), the first fuel supply pipe 34 (the hard pipe portion 34a), the fuel return pipe 37, and the pair of brake liquid pipes 14 to each other. The clip c2 at the center corresponds to the "joining portion" in the present invention.

As shown in FIGS. 3 and 5, the fuel pump 33 is fixed by being fastened to a left side wall of the engine 1 by bolts. Specifically, the fuel pump 33 is mounted on a middle stage portion of the cylinder block 51 below an intake manifold 53 of the rearmost cylinder (rear end cylinder). The fuel pump 33 has both a function of a low pressure pump which pumps up fuel and a function of a high pressure pump which supplies the fuel to the engine 1 under pressure. That is, the fuel pump 33 can pump up fuel from the fuel tank 31 through the first and second fuel supply pipes 34, 35 (low pressure pump function), and can send the pumped-up fuel to the pair of common rails 54a, 54b through the third fuel supply pipes 36a, 36b while pressurizing the fuel (high pressure pump function).

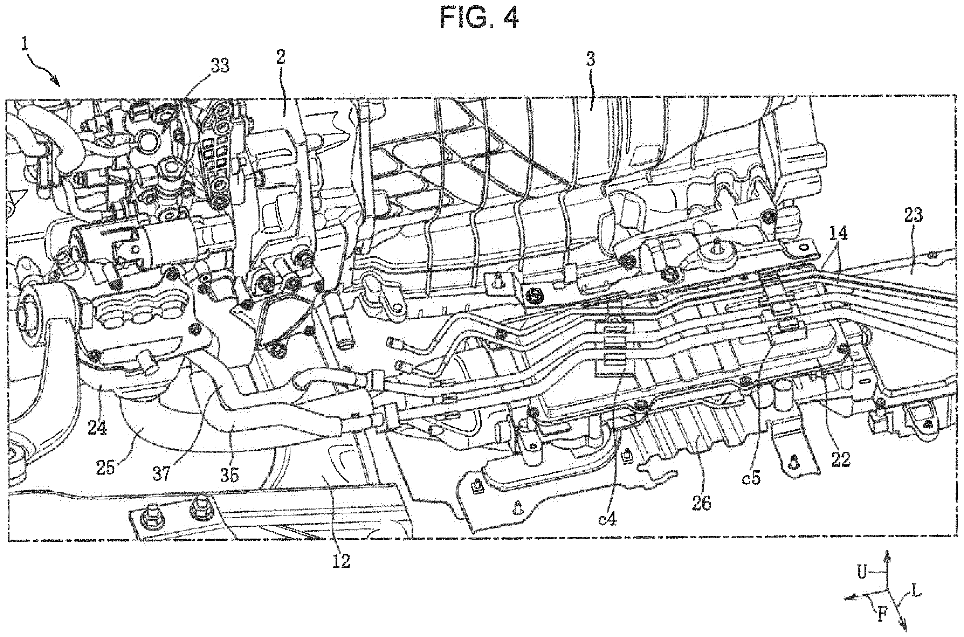

As shown in FIGS. 3 and 4, intermediate portions of the second fuel supply pipe 35 and the fuel return pipe 37 are, in a region from the fuel filter 32 to an area in the vicinity of the engine 1, arranged parallel to each other in a state where the intermediate portions extend in the front-rear direction above the inverter 22 and the converter 23 and, subsequently, are bent and extend upward.

Clips c4, c5 are disposed above the inverter 22. The clip c4 joins the second fuel supply pipe 35 and the fuel return pipe 37 to each other. The clip c5 joins the second fuel supply pipe 35 and the fuel return pipe 37 to each other in the same manner behind the clip c4.

High pressure fuel stored in the common rails 54a, 54b is distributed to injectors (not illustrated) mounted on a cylinder head 52 corresponding to the respective cylinders, and is injected into combustion chambers of the respective cylinders through the injectors. As shown in FIG. 5, surplus fuel in the common rails 54a, 54b is collected in a single common rail return pipe 39, and is sent to a return collecting portion 49. Surplus fuel in the respective injectors is collected in a single injector return pipe 40, and is sent to the return collecting portion 49. Surplus fuel in the fuel pump 33 is sent to the return collecting portion 49 through the pump return pipe 38. The return collecting portion 49 is connected to the fuel tank 31 by way of the fuel return pipe 37. That is, surplus fuel in the fuel pump 33, the common rails 54a, 54b and the respective injectors 55 is collected in the return collecting portion 49 and, then, is returned to the fuel tank 31 through the fuel return pipe 37.

Next, the manner of operation and advantageous effects of this embodiment are described.

The fuel supply device Y according to this embodiment includes: the fuel tank 31; the fuel filter 32 which is connected to the fuel tank 31 by way of the first fuel supply pipe 34; and the fuel pump 33 which is connected to the fuel filter 32 by way of the second fuel supply pipe 35. With such a configuration, it is possible to make fuel supplied from the fuel tank 31 pass through the fuel filter 32 before the fuel reaches the fuel pump 33 and hence, the fuel from which foreign substances such as dust are removed can be supplied to the fuel pump 33.

Further, in this embodiment, the introducing portion 32b to which the first fuel supply pipe 34 is connected is formed on a front portion of the fuel filter 32, and the lead-out portion 32c to which the second fuel supply pipe 35 is connected is formed on a rear portion of the fuel filter 32. Accordingly, at the time of accelerating the vehicle V, fuel can be supplied to the fuel pump 33 not from the front portion of the fuel filter 32 where vapor particles are likely to be collected but from the rear portion of the fuel filter 32 disposed opposite to the front portion of the fuel filter 32 and hence, it is possible to avoid the suction of the vapor particles into the fuel pump 33.

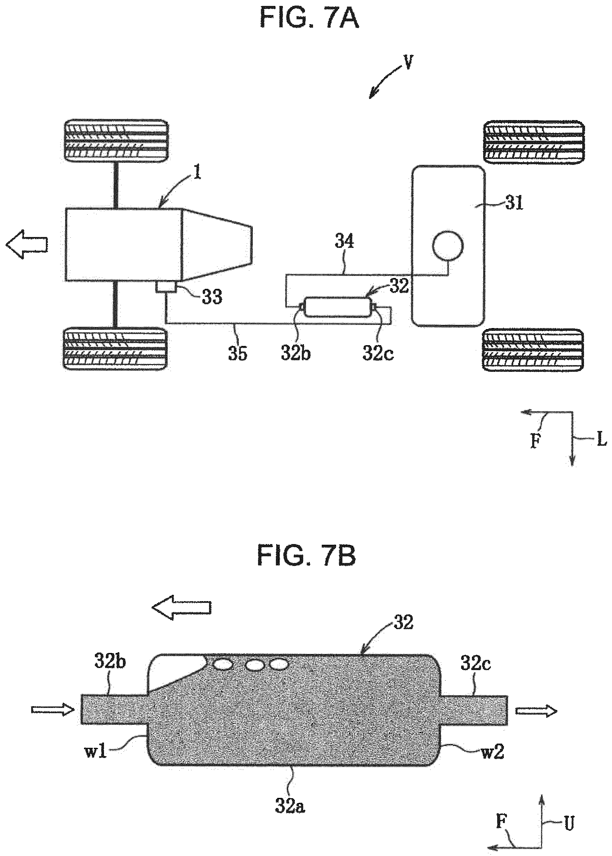

The mechanism by which the suction of vapor particles into the fuel pump 33 can be avoided is described in more detail with reference to FIGS. 7A and 7B. At the time of accelerating the vehicle V, as shown in FIG. 7B, fuel in the fuel filter is moved rearward due to an inertial force and hence, vapor particles (vapor bubbles) are moved to a front side relatively and are collected at the front portion of the fuel filter 32 whereby the vapor particles grows to large vapor particles. Further, at the time of accelerating the vehicle V, the fuel pump 33 sucks fuel with a high suction force. Accordingly, if the second fuel supply pipe 35 is connected to the front portion of the fuel filter 32, collected vapor particles may be sucked into the fuel pump 33. As a result, there is a possibility that a flow rate of fuel ejected from the fuel pump 33 becomes insufficient.

On the other hand, in this embodiment, as shown in FIG. 7A, the second fuel supply pipe 35 is connected to the rear portion (lead-out portion 32c) of the fuel filter 32, and the first fuel supply pipe 34 is connected to the front portion (introducing portion 32b) of the fuel filter 32 and hence, there is no possibility that the collected vapor particles are sucked into the fuel pump 33. At the time of performing braking of the vehicle which generates deceleration, vapor particles are moved rearward. However, accelerator is released and hence, a suction force of the fuel pump 33 is low whereby suction of vapor particles by the fuel pump 33 minimally occurs.

In this embodiment, the fuel filter 32 has a filter case 32a where a size of the filter case 32a in a front-rear direction is larger than a size of the filter case 32a in the vertical direction, the introducing portion 32b is formed on a front wall w1 of the filter case 32a, and the lead-out portion 32c is formed on the rear wall w2 of the filter case 32a. Accordingly, the vertical size of the fuel filter 32 can be shortened and hence, the fuel filter 32 can be disposed without any trouble in a space formed in a lower portion of the vehicle body which is likely to be narrow in the vertical direction. In other words, it is possible to realize the fuel filter 32 which can be easily disposed in a space other than the engine room.

In this embodiment, in the vicinity of an upper side of the fuel filter 32, the intermediate portions of the first and second fuel supply pipes 34, 35 and the intermediate portion of the fuel return pipe 37 are routed so as to extend in the front-rear direction respectively, and the intermediate portions of the first and second fuel supply pipes 34, 35 and the intermediate portion of the fuel return pipe 37 are joined to each other by the clip c2. Accordingly, the positional relationship between the first and second fuel supply pipes 34, 35 and the fuel return pipe 37 can be fixed and hence, the support rigidity of the first and second fuel supply pipes 34, 35 and the fuel return pipe 37 can be enhanced.

In this embodiment, the vehicle V includes: the floor panel 9 where the tunnel portion 9a extending in the front-rear direction is formed at the center portion of the floor panel 9 in the vehicle width direction; and the floor frame 11 which forms a closed cross section extending in the front-rear direction in cooperation with the floor panel 9 outside the tunnel portion 9a in the vehicle width direction. The fuel filter 32 is disposed between the tunnel portion 9a and the floor frame 11 and below the floor panel 9. Accordingly, even in the fuel filter 32 having a relatively large size, it is possible to arrange the fuel filter 32 below the floor panel 9 without affecting the arrangement of other members.

Next, modifications obtained by partially changing the above embodiment are described.
(1) In the above embodiment, the example is described where the fuel supply device according to the present invention is applied to a vehicle on which the six-cylinder longitudinal diesel engine is mounted. However, a kind, the number of cylinders, a type, an arrangement mode and the like of the engine can be arbitrarily set. For example, the present invention may be applied to a vehicle on which a four-cylinder gasoline engine is mounted. In the above embodiment, the example is described where the present invention is applied to a hybrid vehicle. However, it is sufficient that a vehicle to which the present invention is applicable be a vehicle which includes at least an engine, a fuel tank, and a fuel filter. That is, the vehicle to which the present invention is applicable is not limited to a hybrid vehicle.
(2) In the above embodiment, the introducing portion 32b to which the first fuel supply pipe 34 is connected is formed on the front wall w1 of the filter case 32a of the fuel filter 32. However, it is sufficient that the introducing portion 32b be formed on the front portion (the front wall w1 and a portion in the vicinity of the front wall w1) of the filter case 32a. For example, the introducing portion may be formed on a portion of a peripheral wall of the filter case 32a in the vicinity of the front wall w1. In the same manner, in the above embodiment, the lead-out portion 32c to which the second fuel supply pipe 35 is connected is formed on the rear wall w2 of the filter case 32a. However, it is sufficient that the lead-out portion 32c be formed on the rear portion (the rear wall w2 and a portion in the vicinity of the rear wall w2) of the filter case 32a. For example, the lead-out portion may be formed on a portion of a peripheral wall of the filter case 32a in the vicinity of the rear wall w2.
(3) In the above embodiment, the example is described where the fuel filter 32 is disposed between the tunnel side frame 10 on the left side and the floor frame 11 and below the floor panel 9. However, the fuel filter 32 may be disposed between the tunnel side frame 10 on the right side and the floor frame 11 and below the floor panel 9. Further, the fuel filter 32 may be disposed in the tunnel portion 9a.

### <Summary of Embodiment>

The above embodiment is summarized as follows.

The fuel supply device of an engine of this embodiment supplies fuel to the engine mounted on the vehicle. The fuel supply device includes: the fuel tank; the fuel filter which is disposed in front of the fuel tank in a front-rear direction of the vehicle; the fuel pump which is disposed in front of the fuel filter in the front-rear direction of the vehicle; the first fuel supply pipe which connects the fuel tank and the fuel filter to each other; and the second fuel supply pipe which connects the fuel filter and the fuel pump to each other. The first connecting portion to which the first fuel supply pipe is connected is formed on the front portion of the fuel filter, and the second connecting portion to which the second fuel supply pipe is connected is formed on the rear portion of the fuel filter.

In the fuel supply device, the fuel tank and the fuel filter are connected to each other by way of the first fuel supply pipe, and the fuel filter and the fuel pump are connected to each other by way of the second fuel supply pipe. Accordingly, it is possible to make fuel supplied from the fuel tank pass through the fuel filter before the fuel reaches the fuel pump. Accordingly, fuel from which foreign substances such as dust are removed can be supplied to the fuel pump.

Further, the first connecting portion to which the first fuel supply pipe is connected is formed on the front portion of the fuel filter, and the second connecting portion to which the second fuel supply pipe is connected is formed on the rear portion of the fuel filter. Accordingly, at the time of accelerating a vehicle, fuel is supplied to the fuel pump not from the front portion of the fuel filter where vapor particles are likely to be collected but from the rear portion of the fuel filter disposed opposite to the front portion of the fuel filter and hence, it is possible to avoid suction of the vapor particles into the fuel pump.

Preferably, the fuel filter has the filter case in which the size of the filter case in the front-rear direction is larger than the size of the filter case in the vertical direction, and the first connecting portion is formed on the front wall of the filter case, and the second connecting portion is formed on the rear wall of the filter case.

With such a configuration, the vertical size of the fuel filter can be shortened and hence, the fuel filter can be disposed without any trouble in a space formed in the lower portion of the vehicle body which is likely to be narrow in the vertical direction. In other words, it is possible to realize the fuel filter which can be easily disposed in a space other than the engine room.

Preferably, the intermediate portions of the first and second fuel supply pipes are formed so as to extend in the front-rear direction of the vehicle at the position in the vicinity of the fuel filter, and the fuel supply device further includes the joining portion which joins the intermediate portions of the first and second fuel supply pipes to each other.

With such a configuration, the positional relationship between the first and second fuel supply pipes can be fixed and hence, support rigidity of the first and second fuel supply pipe can be enhanced.

Preferably, the fuel supply device further includes the fuel return pipe which returns surplus fuel from the fuel pump to the fuel tank, in which the intermediate portion of the fuel return pipe extends in the front-rear direction of the vehicle and is disposed in the vicinity of the intermediate portions of the first and second fuel supply pipes, and the joining portion joins the intermediate portions of the first and second fuel supply pipes and the intermediate portion of the fuel return pipe.

With such a configuration, the positional relationship between the first and second fuel supply pipes and the fuel return pipe can be fixed and hence, support rigidity of the first and second fuel supply pipe and the fuel return pipe can be enhanced.

Preferably, the vehicle has: the floor panel where the tunnel portion extending in the front-rear direction of the vehicle is formed at the center portion of the floor panel in the vehicle width direction; and the floor frame which forms a closed cross section extending in the front-rear direction of the vehicle in cooperation with the floor panel outside the tunnel portion in the vehicle width direction. The fuel filter is disposed between the tunnel portion and the floor frame and below the floor panel.

With such a configuration, even in the fuel filter having a relatively large size, it is possible to arrange the fuel filter below the floor panel without affecting the arrangement of other members.

This application is based on Japanese Patent application No. 2019-074222 filed in Japan Patent Office on April 9, 2019.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

## Claims

1. A fuel supply device of an engine which supplies fuel to an engine (1) mounted on a vehicle (V), the fuel supply device comprising:
a fuel tank (31);
a fuel filter (32) which is disposed in front of the fuel tank (31) in a front-rear direction of the vehicle;
a fuel pump (33) which is disposed in front of the fuel filter (32) in the front-rear direction of the vehicle;
a first fuel supply pipe (34) which connects the fuel tank (31) and the fuel filter (32) to each other; and
a second fuel supply pipe (35) which connects the fuel filter (32) and the fuel pump (33) to each other,
**characterised in that**
a first connecting portion (32b) to which the first fuel supply pipe (34) is connected is formed on a front portion of the fuel filter (32), and a second connecting portion (32c) to which the second fuel supply pipe (35) is connected is formed on a rear portion of the fuel filter (32).

2. The fuel supply device of an engine according to claim 1, wherein
the fuel filter (32) has a filter case (32a) in which a size of the filter case (32a) in a front-rear direction is larger than a size of the filter case (32a) in a vertical direction, and
the first connecting portion (32b) is formed on a front wall (w1) of the filter case (32a), and the second connecting portion (32c) is formed on a rear wall (w2) of the filter case (32a).

3. The fuel supply device of an engine according to claim 1 or 2, wherein
intermediate portions of the first and second fuel supply pipes (34, 35) are formed so as to extend in the front-rear direction of the vehicle at a position in a vicinity of the fuel filter (32),
and the fuel supply device further includes a joining portion (c2) which joins the intermediate portions of the first and second fuel supply pipes (34, 35) to each other.

4. The fuel supply device of an engine according to claim 3, further comprising a fuel return pipe (37) which returns surplus fuel from the fuel pump (33) to the fuel tank (31),
wherein an intermediate portion of the fuel return pipe (37) extends in the front-rear direction of the vehicle and is disposed in the vicinity of the intermediate portions of the first and second fuel supply pipes (34, 35), and
the joining portion (c2) joins the intermediate portions of the first and second fuel supply pipes (34, 35) and the intermediate portion of the fuel return pipe (37).

5. The fuel supply device of an engine according to any one of claims 1 to 4, wherein
the vehicle (V) includes: a floor panel (9) where a tunnel portion (9a) extending in the front-rear direction of the vehicle is formed at a center portion of the floor panel (9) in a vehicle width direction; and a floor frame (11) which forms a closed cross section extending in the front-rear direction of the vehicle in cooperation with the floor panel (9) outside the tunnel portion (9a) in the vehicle width direction, and
the fuel filter (32) is disposed between the tunnel portion (9a) and the floor frame (11) and below the floor panel (9).

## Patentansprüche

1. Kraftstoffzufuhrvorrichtung eines Motors, die einem Motor (1) Kraftstoff zuführt, der an einem Fahrzeug (V) montiert ist, wobei die Kraftstoffzufuhrvorrichtung umfasst:
einen Kraftstofftank (31);
einen Kraftstofffilter (32), der vor dem Kraftstofftank (31) in einer Front-Heck-Richtung des Fahrzeugs angeordnet ist;
eine Kraftstoffpumpe (33), die vor dem Kraftstofffilter (32) in der Front-Heck-Richtung des Fahrzeugs angeordnet ist;
eine erste Kraftstoffzufuhrleitung (34), die den Kraftstofftank (31) und den Kraftstofffilter (32) miteinander verbindet; und
eine zweite Kraftstoffzufuhrleitung (35), die den Kraftstofffilter (32) und die Kraftstoffpumpe (33) miteinander verbindet,
**dadurch gekennzeichnet, dass** ein erster Verbindungsabschnitt (32b), mit dem das erste Kraftstoffzufuhrrohr (34) verbunden ist, an einem vorderen Abschnitt des Kraftstofffilters (32) gebildet ist, und ein zweiter Verbindungsabschnitt (32c), mit dem das zweite Kraftstoffzufuhrrohr (35) verbunden ist, an einem hinteren Abschnitt des Kraftstofffilters (32) gebildet ist.

2. Kraftstoffzufuhrvorrichtung eines Motors nach Anspruch 1, wobei der Kraftstofffilter (32) ein Filtergehäuse (32a) aufweist, bei dem eine Größe des Filtergehäuses (32a) in einer Front-Heck-Richtung größer ist als eine Größe des Filtergehäuses (32a) in einer vertikalen Richtung, und
der erste Verbindungsabschnitt (32b) an einer vorderen Wand (w1) des Filtergehäuses (32a) gebildet ist und der zweite Verbindungsabschnitt (32c) an einer hinteren Wand (w2) des Filtergehäuses (32a) gebildet ist.

3. Kraftstoffzufuhrvorrichtung eines Motors nach Anspruch 1 oder 2, wobei Zwischenabschnitte des ersten und des zweiten Kraftstoffzufuhrrohrs (34, 35) so gebildet sind, dass sie sich in der Front-Heck-Richtung des Fahrzeugs an einer Position in einer Nähe des Kraftstofffilters (32) erstrecken,
und die Kraftstoffzufuhrvorrichtung ferner einen Verbindungsabschnitt (c2) enthält, der die Zwischenabschnitte des ersten und des zweiten Kraftstoffzufuhrrohrs (34, 35) miteinander verbindet.

4. Kraftstoffzufuhrvorrichtung eines Motors nach Anspruch 3, ferner umfassend ein Kraftstoffrückführrohr (37), das überschüssigen Kraftstoff von der Kraftstoffpumpe (33) zu dem Kraftstofftank (31) zurückführt,
wobei sich ein Zwischenabschnitt des Kraftstoffrückführrohrs (37) in der Front-Heck-Richtung des Fahrzeugs erstreckt und in der Nähe der Zwischenabschnitte des ersten und des zweiten Kraftstoffzufuhrrohrs (34, 35) angeordnet ist, und
der Verbindungsabschnitt (c2) die Zwischenabschnitte des ersten und des zweiten Kraftstoffzufuhrrohrs (34, 35) und den Zwischenabschnitt des Kraftstoffrückführrohrs (37) verbindet.

5. Kraftstoffzufuhrvorrichtung eines Motors nach einem der Ansprüche 1 bis 4, wobei
das Fahrzeug (V) beinhaltet: ein Bodenblech (9), wo ein Tunnelabschnitt (9a), der sich in der Front-Heck-Richtung des Fahrzeugs erstreckt, an einem Mittelabschnitt der Bodenplatte (9) in einer Fahrzeugbreitenrichtung gebildet ist;
und einen Bodenrahmen (11), der einen geschlossenen Querschnitt, der sich in der Front-Heck-Richtung des Fahrzeugs erstreckt, unter Mitwirkung der Bodenplatte (9) außerhalb des Tunnelabschnitts (9a) in der Fahrzeugbreitenrichtung bildet, und
der Kraftstofffilter (32) zwischen dem Tunnelabschnitt (9a) und dem Bodenrahmen (11) und unter dem Bodenblech (9) angeordnet ist.

## Revendications

1. Dispositif d'alimentation en carburant d'un moteur qui fournit du carburant à un moteur (1) monté sur un véhicule (V), le dispositif d'alimentation en carburant comprenant :
un réservoir de carburant (31) ;
un filtre à carburant (32) qui est disposé devant le réservoir de carburant (31) dans une direction avant-arrière du véhicule ;
une pompe à carburant (33) qui est disposée devant le filtre à carburant (32) dans la direction avant-arrière du véhicule ;
un premier tuyau d'alimentation en carburant (34) qui connecte le réservoir de carburant (31) et le filtre à carburant (32) l'un à l'autre ; et
un second tuyau d'alimentation en carburant (35) qui connecte le filtre à carburant (32) et la pompe à carburant (33) l'un à l'autre,
**caractérisé en ce qu'**une première portion de connexion (32b) à laquelle le premier tuyau d'alimentation en carburant (34) est connecté est formée sur une portion avant du filtre à carburant (32), et une seconde portion de connexion (32c) à laquelle le second tuyau d'alimentation en carburant (35) est connecté est formée sur une portion arrière du filtre à carburant (32).

2. Dispositif d'alimentation en carburant d'un moteur selon la revendication 1, dans lequel
le filtre à carburant (32) a un carter de filtre (32a) dans lequel une taille du carter de filtre (32a) dans une direction avant-arrière est plus grande qu'une taille du carter de filtre (32a) dans une direction verticale, et
la première portion de connexion (32b) est formée sur une paroi avant (w1) du carter de filtre (32a), et la seconde portion de connexion (32c) est formée sur une paroi arrière (w2) du carter de filtre (32a).

3. Dispositif d'alimentation en carburant d'un moteur selon la revendication 1 ou 2, dans lequel
des portions intermédiaires des premier et second tuyaux d'alimentation en carburant (34, 35) sont formées de manière à s'étendre dans la direction avant-arrière du véhicule à une position à proximité du filtre à carburant (32),
et le dispositif d'alimentation en carburant inclut en outre une portion de liaison (c2) qui relie les portions intermédiaires des premier et second tuyaux d'alimentation en carburant (34, 35) l'une à l'autre.

4. Dispositif d'alimentation en carburant d'un moteur selon la revendication 3, comprenant en outre un tuyau de renvoi de carburant (37) qui renvoie du carburant en excès de la pompe à carburant (33) au réservoir de carburant (31), dans lequel une portion intermédiaire du tuyau de renvoi de carburant (37) s'étend dans la direction avant-arrière du véhicule et est disposée à proximité des portions intermédiaires des premier et second tuyaux d'alimentation en carburant (34, 35), et
la portion de liaison (c2) relie les portions intermédiaires des premier et second tuyaux d'alimentation en carburant (34, 35) et la portion intermédiaire du tuyau de renvoi de carburant (37).

5. Dispositif d'alimentation en carburant d'un moteur selon l'une quelconque des revendications 1 à 4, dans lequel
le véhicule (V) inclut : un panneau de plancher (9) où une portion de tunnel (9a) s'étendant dans la direction avant-arrière du véhicule est formée au niveau d'une portion centrale du panneau de plancher (9) dans un sens de la largeur du véhicule ; et un cadre de plancher (11) qui forme une section transversale fermée s'étendant dans la direction avant-arrière du véhicule en coopération avec le panneau de plancher (9) à l'extérieur de la portion de tunnel (9a) dans le sens de la largeur du véhicule, et
le filtre à carburant (32) est disposé entre la portion de tunnel (9a) et le cadre de plancher (11) et en dessous du panneau de plancher (9).
